# EUROPEAN PATENT SPECIFICATION

(11) **EP 3 518 155 B1**
(45) Date of publication and mention of the grant of the patent: **26.05.2021**
(21) Application number: 18382053.9
(22) Date of filing: 30.01.2018
(51) Int. Cl.: G06Q 10/00, G01S 5/00

(54) **ANTI-COLLISION SYSTEM AND METHOD BETWEEN OBJECTS**
KOLLISIONSSCHUTZSYSTEM UND -VERFAHREN ZWISCHEN OBJEKTEN
SYSTÈME ET PROCÉDÉ ANTICOLLISION ENTRE OBJETS

(43) Date of publication of application: 31.07.2019
(73) Proprietor: Claitec Solutions, SL, 17003 Girona (ES)
(72) Inventor: MASSÓ MASÓ, Francesc, 17430 SANTA COLOMA DE FARNERS (ES); CHETRIT RUSSI, Ricardo, 17190 SALT (ES)
(74) Representative: Juncosa Miró, Jaime

(56) References cited:
- EP-A1- 2 733 503
- EP-A1- 3 264 132
- WO-A1-2016/189526
- WO-A1-2016/193897
- WO-A1-2017/129478
- WO-A1-2017/196584
- WO-A2-2017/196583
- CN-A- 106 324 561
- JP-A- 2011 017 684
- KR-A- 20170 092 205
- KR-B1- 101 814 698
- US-A1- 2007 021 915
- US-A1- 2016 363 648
- US-A1- 2017 019 897
- US-A1- 2017 135 063
- English: "CollisionAvoidance System", , 10 July 2017 (2017-07-10), XP055484135, Retrieved from the Internet: URL:https://web.archive.org/web/2017071002 3235/https://www.claitec.com/en/portfolio/ collision-avoidance-system-cas/ [retrieved on 2018-06-13]
- Liu Xu ET AL: "PoS(CENet2017)037 Design and Development of Vehicle Collision- Avoidance System Based on UWB Wireless Sensor Networks", , 23 July 2017 (2017-07-23), XP055778024, Retrieved from the Internet: URL:https://pdfs.semanticscholar.org/19e5/ 37a71eb1fd484ceff64d131f7c82abc07b18.pdf [retrieved on 2021-02-19]

## Description

### Technical field

The present invention discloses an anti-collision system and method for eliminating or considerably reducing collision accidents between a plurality of objects, specifically for synchronized objects in areas with traffic, wherein said areas with traffic, are generally closed areas and may include: warehouses, production areas or loading bay areas.

In the following description the terms TAG and ANCHOR are used. The term TAG will be understood as a transceiver unit associated with an object emitting a signal, whereas the term ANCHOR (also known as beacon in certain patent literature) will be understood as a transceiver unit associated with an object receiving a signal. The emitted and received signals are, in general, wireless and in particular the signals are ultra-wide band radiofrequency.

### State of the Art

In recent times, the need for safety systems to avoid accidents due to collisions has increased and as such several positioning, anti-collision and/or proximity detection systems have appeared and are being implemented in working areas with traffic to minimize possible accidents and determine the distance between objects. As this technology evolves, there is a need to optimize and improve the general performance of these systems, as well as improving the precision when determining the distance between objects.

Chinese patent application no. CN 106324561 A, divulges an asynchronous ultra-wide band based positioning system and method, wherein a object, operating as a tag can emit a ranging signal towards independent objects in a fixed location operating as beacons (similar to an anchor) and the distance between the tag object and the beacons is determined using three-way ranging, wherein the tag object knows the coordinates of the fixed beacons. However this system is limited to determining the distance between a mobile object and a plurality of known fixed beacons.

Whereas, granted patent US 9,081,046 B2 discloses a proximity detection system for complex work environments for detecting the presence of vehicles or workers carrying alarm devices wherein the vehicles have at least one magnetic field generator which can emit and sense pulses and radio frequency electromagnetic signals. The alarm devices are adapted to sense the strength of pulses emitted by the magnetic generators, and emit a response signal and according to a time delay of the response determine if the carrier of the alarm device is in a first or a second zone of the magnetic field generated. This system requires the use of alarm devices as well as a magnetic field generator which operates as both an emitter and a receiver, and the alarm device senses and emits echo response signals. The exact location of each alarm device carrier with regards to the magnetic field generated by the vehicles is limited to either a first or a second zone of the magnetic field generated and doesn't indicate an exact location of the alarm device carrier.

US2017135063 A1 discloses a positioning system that includes a plurality of anchor stations each configured to transmit a radio frequency signal. A mobile station includes a radio frequency transceiver configured to transmit and receive a radio frequency signal from at least one of the plurality of anchor stations. A processing unit is configured to determine position information of the mobile unit based upon the transmitted and received radio frequency signal. Another positioning system uses a number of beacons ranging a number of mobile tags with ultra-wide band ranging, and communicating wirelessly with an application server.

US2007021915 A1 discloses a method for avoiding collisions between a host vehicle and other vehicles in which the position of the vehicles is determined, the vehicles are equipped with a transmitter/receiver, and in the host vehicle, the possibility of a collision involving the host vehicle is assessed by receiving signals from the transmitter/receivers of each other vehicle, analyzing the received signals to extract positional information about the transmitter/receivers from each signal, and when a received signal contains additional information of interest about a possible collision involving the host vehicle, analyzing the extracted positional information to determine whether any signals contain additional information of interest about a possible collision involving the host vehicle. Additional information is extracted only from such signals and analyzed to ascertain whether a collision between the host vehicle and any other vehicles is likely to occur in order to enable action to be taken to prevent the collision, e.g., evasive action.

These and other problems regarding crowded areas or areas with increasing traffic, specifically work-site areas, to avoid accidents due to collision of objects, are addressed by the following invention.

### Brief description of the invention

Claims 1, 9 disclose the present invention. Preferred embodiments are disclosed in claims 2-9, 10-14.

In order to solve the limitations of the state of the art and provide a safety system and method, the present invention discloses an anti-collision system for areas with traffic of a plurality of objects (the majority of them being mobile), which results in a high risk of an accident occurring, due to a collision between said plurality of objects, wherein said objects are either mobile or static or a combination of objects in both states.

As previously indicated the cited areas with traffic are generally closed or delimited areas and may include: warehouses, production areas or loading bay areas.

The plurality of objects which are included in the anti-collision system at least comprises vehicles, wherein said vehicles include:
- fork-lift Trucks (FLTs),
- autonomous, automated and/or programmable machines,
- automated guided vehicles (AGVs) and/or
- other work equipment.

The plurality of objects is not limited to the cited vehicles and other work equipment may also include other objects commonly used in warehouses, production areas and/or loading bay areas, which are known to an expert. The plurality of objects may further comprise people, in combination with the previously cited vehicles.

The anti-collision system is defined by claim 1, and comprises according as per the state of the art:
- a plurality of objects, wherein each object comprises at least a transceiver unit and a processor configured to calculate a distance between the objects derived from ranging signals emitted and received by said transceiver unit;
- a communication network which enables bidirectional communication between the plurality of objects using the transceiver unit associated with each device; and
- a control unit,

According to the proposal of this invention to avoid the collision of the objects included in the system, the transceiver unit of each object is configured by the control unit to alternate between a first operating mode, in which it operates as a TAG and a second operation mode, in which it operates as an ANCHOR. Moreover, when the transceiver unit of an object is in the first operating mode, operating as a TAG, said object transmits a ranging signal to the rest of the plurality of objects which are inside the ranging radius of the TAG object. Whereas if the transceiver unit of an object is in the second operating mode, operating as an ANCHOR, if said object is inside the maximum ranging radius and detects the ranging signal transmitted by a TAG object, the ANCHOR object can determine the distance between them.

The cited control unit is either integrated in each object, or in another alternative the control unit is located in a remote position of the system with regards to all of the objects included in the system and controls them globally. In a further alternative embodiment, both configurations of the control unit can be used and applied in the area where the anti-collision system has been implemented, wherein one of them is automatically turned on in case of failure of the other one.

The plurality of objects comprises at least five objects. The transceiver unit of the object operating as the TAG emits ranging signals towards objects operating as ANCHORS, wherein once the transceiver units of ANCHOR objects have received the ranging signal, the processors integrated in the ANCHOR objects, then determine the distance between themselves and the TAG, which is currently object. Moreover, the processors of each ANCHOR object determine the distance between themselves and the TAG object by measuring the distance between them. Once the distance between ANCHOR objects operating as ANCHORS, and the TAG object operating as the TAG has been determined, the control unit assigns one of the ANCHOR objects as the new TAG and the TAG object, previously the TAG, now operates as another ANCHOR and this is repeated until all objects have operated as the TAG and have determined the distance between them.

The configuration executed by the control unit comprises establishing a synchronized time-cycle protocol for the plurality of objects and designating an allotted time-slot for each object to either operate as a TAG object or as an ANCHOR object, wherein at any time only one object is in the first operating mode, and all the remaining objects are in the second operating mode, without over-lapping with the other objects.

To eliminate or considerably reduce the possibility of an accident occurring, the distance between the plurality of objects included in the anti-collision system must be determined. Therefore, in a particular embodiment of the invention, the distance between objects of the system is determined using Time of Flight (ToF), which in itself may be divided into several subcategories, including: one way ranging (OWR), two way ranging (TWR), symmetrical double-sided two way ranging (SDS-TWR), asymmetrical double-sided two way ranging (ADS-TWR) or angle of arrival (AoA). However, the present invention isn't limited exclusively to the use of ToF to determine the distance between objects, and alternative approaches may be used such as: time difference of arrival (TDoA), received signal strength indicator (RSSI) or signal-to-noise ratio (SNR).

The disclosed invention also comprises an anti-collision method for areas with traffic as defined by claim 9. The area includes a plurality of objects wherein each object comprises at least a transceiver unit and a processor, the method comprising determining a distance between said plurality of objects by using ranging signals emitted and received by said transceiver units under the guidance of a control unit, through a communication network which enables bidirectional communication between the plurality of objects.

The method is characterized in that the objects comprise at least five objects and in that the control unit is either integrated in each object and/or is located in a remote position of the system with regards to all of the objects. Moreover, the method comprises, designating, by said control unit, at any time a first object to operate in a first operating mode as the TAG object inside an allotted time-slot defined by a synchronized time cycle and the remaining objects in a second operating mode as ANCHOR objects. Only one object of said plurality of objects operates as the TAG object at a given moment according to a configuration executed by the control unit, without over-lapping. Likewise, the transceiver unit of the object operating as the TAG emits ranging signals towards objects operating as ANCHORS, wherein once the transceiver units of ANCHOR objects have received the ranging signal, the processors integrated in the ANCHOR objects, then determine the distance between themselves and the TAG, which is currently object. The processors of each ANCHOR object determine the distance between themselves and the TAG object by measuring the distance between them. Once the distance between ANCHOR objects operating as ANCHORS, and the TAG object operating as the TAG has been determined, the control unit assigns one of the ANCHOR objects as the new TAG and the TAG object, previously the TAG, now operates as another ANCHOR and this is repeated until all objects have operated as the TAG and have determined the distance between them.

Each object included in the system and method disclosed has a maximum ranging radius, wherein in some particular embodiments of the invention, the maximum ranging radius is set between 30 and 40 meters. In another particular embodiment of the invention the communication network enabling the bidirectional communication is a wireless communication network, wherein said wireless communication network uses ultra-wideband radiofrequency signals.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and not limitative, in which:
- **FIG. 1** illustrates a particular embodiment of the invention, wherein the system comprises five objects and all the possible communications between said objects.
- **FIG. 2** illustrates a particular embodiment of the invention, in which a control unit is integrated in each object included in the system.
- **FIG. 3** illustrates a particular embodiment of the invention, in which the control unit is in a remote location with regards to the plurality of objects included in the system.
- **FIG. 4** illustrates an example of the time cycle of a first object of the anti-collision system and how it interacts with the remaining objects.
- **FIG. 5****,** which is similar to **FIG. 4** in that it illustrates an example of the time cycle for a second object of the anti-collision system and how it interacts with the remaining objects.

### Detailed description of an embodiment

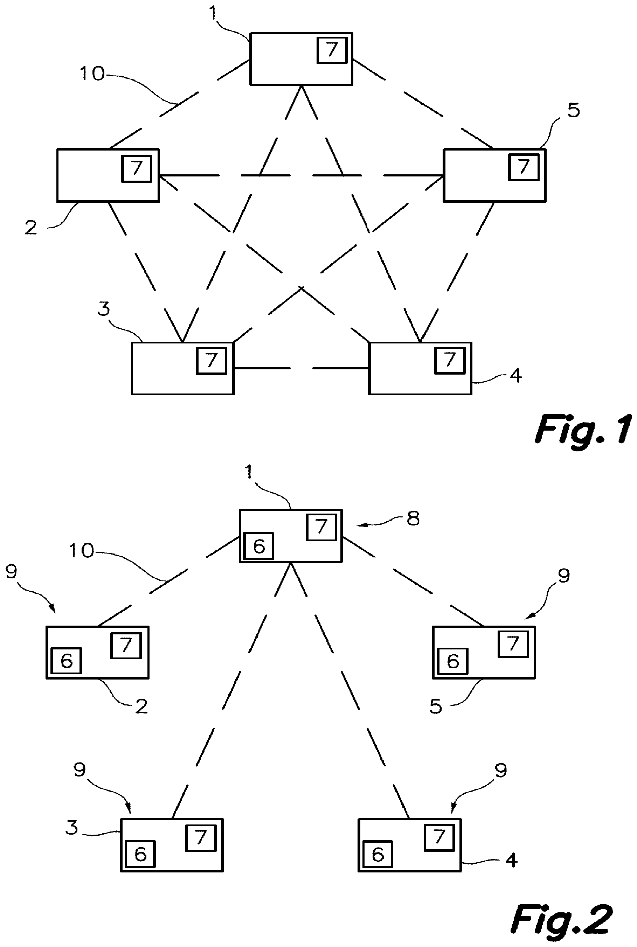

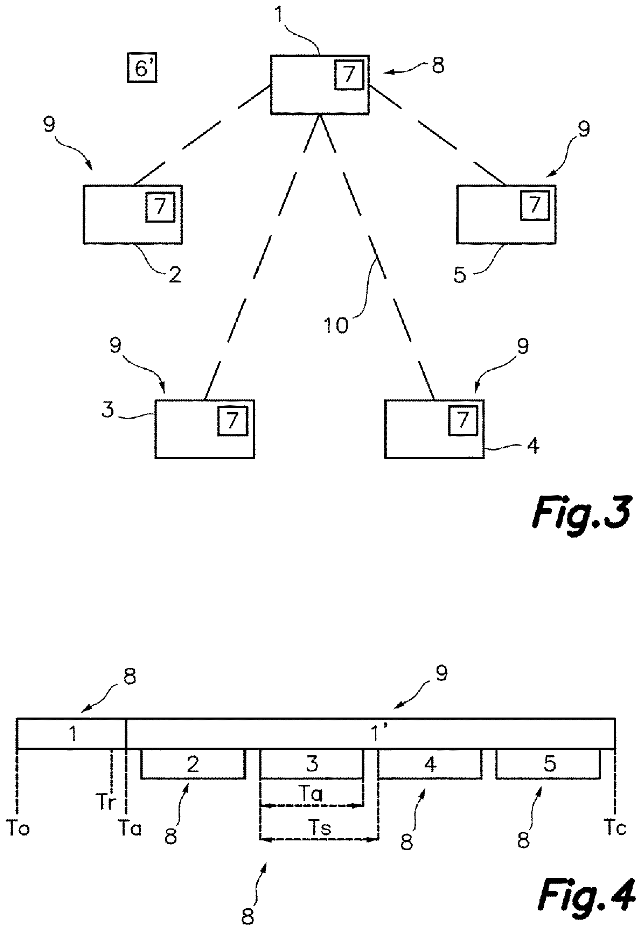

**FIG. 1** illustrates a general overview an anti-collision system including a plurality of objects, 1, 2, 3, 4 and 5, wherein in this particular embodiment the anti-collision system includes five objects, however in other embodiments of the invention the system may include more (which will be the more common occurrence) or less than five objects. Each object 1 - 5, comprises at least a processor, a transceiver unit 7 and in some embodiments of the invention (**FIG. 2**) a control unit 6 (not shown in this figure, see **FIG. 2** or **FIG. 3**).

The transceiver unit 7 of each object 1 - 5, is configured by the control unit 6 to alternate between a first operating mode as a TAG 8 and a second operation mode as an ANCHOR 9. When the transceiver unit 7 of an object is in the first operating mode, operating as a TAG 8, said object transmits a ranging signal 10 to the rest of the plurality of objects operating as ANCHORS 9 which are inside the ranging radius of the TAG 8.

**FIG. 2** and **FIG. 3****,** represent possible alternatives of particular embodiments of the invention, regarding the location of the control unit 6, wherein the control unit 6 may be located either, in a remote position included in the area where the anti-collision system is implemented or, wherein the control unit 6 is integrated in each object, 1 - 5 of this particular embodiment, included in the anti-collision system.

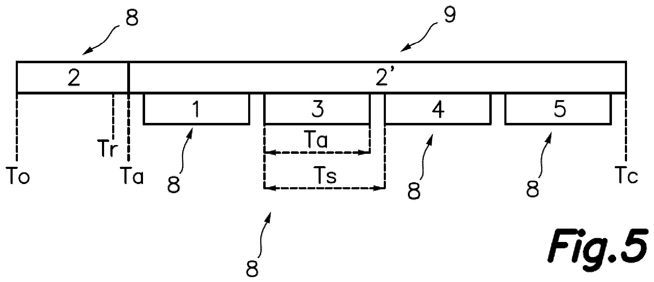

**FIG. 2** illustrates a first alternative regarding the location of the control unit, wherein in this particular embodiment, a control unit 6 is integrated in each of the objects 1 - 5, and said control units 6 execute a configuration which comprises establishing a synchronized time-cycle protocol (see **FIG. 4** and **FIG. 5**) and designating an allotted time-slot for each object 1 - 5 to either operate as the TAG 8 or as ANCHORS 9, wherein only one object can operate in the first operating mode as the TAG 8 at any one moment, and wherein the control unit 6 of each object 1 - 5 modifies the set-configuration or operating mode of the transceiver units 7 of each object 1 - 5 between TAG 8 or ANCHOR 9, accordingly.

In this particular embodiment, the transceiver unit 7 of object 1 is in the first operating mode as the TAG 8, and therefore the transceiver units 7 of each of the remaining objects 2 - 5 are in the second operating mode as ANCHORS 9.

The transceiver unit 7 of object 1, operating as the TAG 8, emits ranging signals 10 towards objects 2 - 5, operating as ANCHORS 9. Once the transceiver units 7 of objects 2 - 5 have received the ranging signal 10, the processors integrated in objects 2 - 5, can then determine the distance between themselves (objects 2 - 5) and the TAG 8, currently object 1.

In this particular embodiment, the processors of each ANCHOR 9 determine the distance between themselves and the TAG 8 through the use of, for example, time of flight technology, which is the time the ranging signal 10 needs to travel between the TAG 8 and each ANCHOR 9, and can therefore measure the distance between them. Time of flight technology comprises a wide range of possible solutions with which to determine the distance, and in this particular embodiment the anti-collision system uses two-way ranging signals 10.

On the other hand, **FIG. 3** illustrates a second alternative regarding the location of the control unit, wherein in this particular embodiment, the control unit 6 is located in a remote location inside the area where the anti-collision system has been implemented and controlling the plurality of objects, 1 - 5 simultaneously, by executing the same configuration as the one described in **FIG. 2****.**

However, in this particular embodiment, the control unit 6 sends, through a suitable communication network, a signal towards the transceiver units 7 of objects 1 - 5 to modify their current operating mode, between the first operating mode as the TAG 8, and the second operating mode as the ANCHOR 9.

For any of the embodiments described in **FIG. 2** or **FIG. 3**, once the distance between objects 2 - 5 operating as ANCHORS 9, and object 1 operating as the TAG 8 has been determined, the control unit 6 assigns one of the objects 2 - 5 as the new TAG 8 and the object 1, previously the TAG 8, now operates as another ANCHOR 9. This is repeated until all objects 1 - 5 have operated as the TAG 8 and have determined the distance between them.

As it has been previously stated, **FIG. 4** illustrates the time cycle, Tc, of the plurality of objects 1 - 5 included in the anti-collision system, for this particular embodiment, and it specifically centers arounds the interaction of a first object 1 from the plurality of objects 1 - 5 and how it interacts with the remaining objects, 2 - 5.

In this particular embodiment, a control unit 6 designates the transceiver unit 7 of object 1 as the TAG 8, for a certain time period which extends from an initial time, T₀, which is 0 to the end of a ranging time, Tr, during which the transceiver unit 7 of object 1 emits ranging signals 10 towards the remaining objects 2 - 5 operating as ANCHORS 9, so that said objects 2 - 5 can determine the distance between themselves and object 1.

Once object 1' has finished emitting ranging signals 10, it automatically switches to the second operating mode as another ANCHOR 10 after a time delay corresponding to the anchor time, Ta. The configuration executed by the control unit 6 will then in turn define the other objects 2 - 5 as the TAGs 8 in a synchronized manner, one at a time without over-lapping, during which object 1' operating as the ANCHOR 10 can determine the distance from the other objects 2 - 5, until the time cycle, Tc, has ended.

**FIG. 5** is identical to **FIG. 4** with the exception in that it illustrates the time cycle, Tc, from the point of view of the second object 2, of the anti-collision system acting as a TAG 8 and how it interacts with the remaining objects, 1 and 3 - 5 in this particular embodiment of the invention, wherein the control unit 6 designates the transceiver unit 7 of object 2 to operate in the first operating mode as the TAG 8 during which it emits ranging signals 10 to the other objects 1 and 3 - 5 operating as ANCHORS 9 during a ranging time, Tr, after which for the remainder of the time cycle, Tc, the object 2 will operate as an ANCHOR 9 and receive ranging signals 10 from the other objects 1 and 3 - 5 when they are each operating sequentially without over-lapping as TAGs 8 to determine the distance between each other.

In a particular embodiment of the present invention, complementing the description of **FIG. 4** and **FIG. 5****,** the different time durations can be defined as follows:
- Ranging Time, Tr, is defined as the maximum number of objects multiplied by a minimum time required to emit the ranging signals 10, wherein in a preferred embodiment of the present invention, the preferred ranging time, Tr, is 27 ms;
- Anchor Time, Ta, is defined as the time required for the transceiver unit 7 of any object to switch between a first operating mode as the TAG 8 to a second operating mode as the ANCHOR 9, or vice-versa, which is usually the ranging time, Tr, plus a time delay, wherein in a preferred embodiment of the present invention, the preferred anchor time, Ta, is 32 ms;
- Slot time, Ts, corresponds to the allotted time slot, Ts, defined by the configuration executed by the control unit 6 to each object 1 - 5 and is basically the anchor time Ta plus a time delay, wherein in a preferred embodiment of the present invention, the preferred slot time, Ts, is 37 ms; and
- Time Cycle, Tc, is defined as the slot time Ts multiplied by the maximum number of objects + 1, wherein in a preferred embodiment of the present invention, the preferred time cycle, Tc, is 222 ms.

It will be understood that various parts of one embodiment of the invention can be freely combined with parts described in other embodiments, even being said combination not explicitly described, provided there is no harm in such combination and provided said combination does not go beyond the scope of the invention as defined in the independent claims.

## Claims

1. An anti-collision system for areas with traffic, wherein the system comprises:
- a plurality of objects (1, 2, 3, 4, 5) wherein each object (1, 2, 3, 4, 5) comprises at least a transceiver unit (7) and a processor configured to calculate a distance between the objects (1, 2, 3, 4, 5) derived from ranging signals (10) emitted and received by said transceiver unit (7);
- a communication network which enables bidirectional communication between the plurality of objects (1, 2, 3, 4, 5) using the transceiver unit (7) associated with each object (1, 2, 3, 4, 5); and
- a control unit (6);
wherein:
- the plurality of objects (1, 2, 3, 4, 5) comprises at least five objects;
- the control unit (6) is either integrated in each object (1, 2, 3, 4, 5) and/or located in a remote position of the system with regards to all of the objects (1, 2, 3, 4, 5);
- the transceiver unit (7) of each object (1, 2, 3, 4, 5) is configured by said control unit (6) to alternate between a first operating mode as a transceiver unit associated with an object emitting a signal, or TAG, (8) and a second operation mode as a transceiver unit associated with an object receiving a signal, or ANCHOR, (9);
wherein at any time only one object is in the first operating mode as the TAG (8) and all the remaining objects are in the second operating mode as ANCHORS (9), without over-lapping with the other objects;
wherein the transceiver unit (7) of the object (1), operating as the TAG (8), emits ranging signals (10) towards objects (2 - 5), operating as ANCHORS (9), wherein once the transceiver units (7) of ANCHOR objects (2-5) have received the ranging signal (10), the processors integrated in the ANCHOR objects (2 - 5), then determine the distance between themselves (2 - 5) and the TAG (8), which is currently object (1);
wherein the processors of each ANCHOR object (2-5) determine the distance between themselves and the TAG object (1) by measuring the distance between them, and
once the distance between ANCHOR objects (2 - 5) operating as ANCHORS (9), and the TAG object (1) operating as the TAG (8) has been determined, the control unit (6) assigns one of the ANCHOR objects (2 - 5) as the new TAG (8) and the TAG object (1), previously the TAG (8), now operates as another ANCHOR (9) and this is repeated until all objects (1 - 5) have operated as the TAG (8) and have determined the distance between them; and wherein said configuration executed by the control unit (6) which comprises establishing a synchronized time-cycle protocol for the plurality of objects (1, 2, 3, 4, 5) and designating an allotted time-slot for each object (1, 2, 3, 4 and 5) to either operate as a TAG (8) or as an ANCHOR (9).

2. The anti-collision system according to claim 1, wherein the maximum ranging radius of the transceiver unit (7) in each object (1, 2, 3, 4 and 5) is set at a distance between 30 and 40 meters.

3. The anti-collision system according to claim 1, wherein the communication network enabling the bidirectional communication is a wireless communication network.

4. The anti-collision system according to claim 3, wherein the wireless communication network uses ultra-wideband radiofrequency signals.

5. The anti-collision system according to claim 1, wherein each object (1, 2, 3, 4, 5) is either
static or mobile.

6. The anti-collision system according to claim 1 or 5, wherein the plurality of objects (1, 2, 3, 4 and 5) comprises vehicles including: FLTs, autonomous and/or programmable machines, automated guided vehicles and/or work equipment.

7. The anti-collision system according to claim 6, wherein the plurality of objects (1, 2, 3, 4 and 5), further comprises people.

8. The anti-collision system according to claims 1 or 2, wherein the distance between objects (1, 2, 3, 4, 5) is determined using Time of Flight.

9. An anti-collision method for areas with traffic, the area including a plurality of objects (1, 2, 3, 4, 5) wherein each object (1, 2, 3, 4, 5) comprises at least a transceiver unit (7) and a processor, the method comprising determining a distance between said plurality of objects (1, 2, 3, 4, 5) by using ranging signals (10) emitted and received by said transceiver units (7) under the guidance of a control unit (6), through a communication network which enables bidirectional communication between the plurality of objects (1, 2, 3, 4, 5),
wherein:
- the plurality of objects (1, 2, 3, 4, 5) comprises at least five objects;
- the control unit (6) is either integrated in each object (1, 2, 3, 4, 5) and/or located in a remote position of the system with regards to all of the objects (1, 2, 3, 4, 5); and in that the method comprises:
- designating, by said control unit (6), at any time a first object to operate in a first operating mode as a transceiver unit associated with an object emitting a signal, or TAG, (8) inside an allotted time-slot defined by a synchronized time cycle and the remaining objects in a second operating mode as a transceiver unit associated with an object receiving a signal, or ANCHOR, (9), wherein only one object of said plurality of objects (1, 2, 3, 4, 5) operates as the TAG (8) at a given moment according to a configuration executed by the control unit (6), without over-lapping;
- emitting, by the transceiver unit (7) of the object (1) operating as the TAG (8), ranging signals (10) towards objects (2 - 5) operating as ANCHORS (9), wherein once the transceiver units (7) of ANCHOR objects (2-5) have received the ranging signal (10), the processors integrated in the ANCHOR objects (2 - 5), then determine the distance between themselves (2 - 5) and the TAG (8), which is currently object (1);
- determining, by the processors of each ANCHOR object (2-5), the distance between themselves and the TAG object (1) by measuring the distance between them; and
- once the distance between ANCHOR objects (2 - 5) operating as ANCHORS (9), and the TAG object (1) operating as the TAG (8) has been determined, the control unit (6) assigns one of the ANCHOR objects (2 - 5) as the new TAG (8) and the TAG object (1), previously the TAG (8), now operates as another ANCHOR (9) and this is repeated until all objects (1 - 5) have operated as the TAG (8) and have determined the distance between them.

10. The anti-collision method according to claim 9, wherein the maximum ranging radius of the transceiver unit (7) in each object (1, 2, 3, 4 and 5) is set at a distance between 30 and 40 meters.

11. The anti-collision method according to claim 9, wherein the communication network enabling the bidirectional communication is a wireless communication network using ultra-wideband radiofrequency signals.

12. The anti-collision method according to claim 9, wherein each object (1, 2, 3, 4 and 5), is either static or mobile.

13. The anti-collision method according to claim 9 or 12, wherein the plurality of objects (1, 2, 3, 4, 5) at least comprises vehicles including: FLTs, autonomous and/or programmable machines, automated guided vehicles and/or work equipment.

14. The anti-collision method according to claims 9, wherein the distance between objects (1, 2, 3, 4, 5) is determined using Time of Flight.

## Patentansprüche

1. Kollisionsschutzsystem für Bereiche mit Verkehr, wobei das System Folgendes umfasst:
- eine Vielzahl von Objekten (1, 2, 3, 4, 5), wobei jedes Objekt (1, 2, 3, 4, 5) mindestens eine Sende-Empfangseinheit (7) und einen Prozessor umfasst, der so ausgebildet ist, dass er eine Entfernung zwischen den Objekten (1, 2, 3, 4, 5) berechnet, die von Abstandssignalen (10) abgeleitet wird, welche von der Sende-Empfangseinheit (7) ausgesendet und empfangen werden;
- ein Kommunikationsnetzwerk, das eine bidirektionale Kommunikation zwischen der Vielzahl von Objekten (1, 2, 3, 4, 5) unter Verwendung der jedem Objekt (1, 2, 3, 4, 5) zugeordneten Sende-Empfangseinheit (7) ermöglicht; und
- eine Steuereinheit (6);
wobei:
- die Vielzahl der Objekte (1, 2, 3, 4, 5) mindestens fünf Objekte umfasst;
- die Steuereinheit (6) entweder in jedes Objekt (1, 2, 3, 4, 5) integriert ist und/oder sich in einer abgelegenen Position des Systems in Bezug auf alle Objekte (1, 2, 3, 4, 5) befindet;
- die Sende-Empfangseinheit (7) jedes Objektes (1, 2, 3, 4, 5) durch die Steuereinheit (6) so ausgebildet ist, dass sie zwischen einem ersten Betriebsmodus als Sende-Empfangseinheit, die einem Objekt zugeordnet ist, das ein Signal aussendet, oder TAG, (8) und einem zweiten Betriebsmodus als Sende-Empfangseinheit, die einem Objekt zugeordnet ist, das ein Signal empfängt, oder ANCHOR, (9) wechselt;
wobei sich zu jedem Zeitpunkt nur ein Objekt im ersten Betriebsmodus als TAG (8) und alle anderen Objekte im zweiten Betriebsmodus als ANCHOR (9) befinden, ohne sich mit den anderen Objekten zu überlappen;
wobei die Sende-Empfangseinheit (7) des als TAG (8) fungierenden Objektes (1) Abstandssignale (10) in Richtung der als ANCHOR (9) fungierenden Objekte (2 - 5) aussendet, wobei die in den ANCHOR-Objekten (2 - 5) integrierten Prozessoren, sobald die Sende-Empfangseinheiten (7) der ANCHOR-Objekte (2 - 5) das Abstandssignal (10) empfangen haben, dann die Entfernung zwischen sich selbst (2 - 5) und dem TAG (8), der gerade Objekt (1) ist, bestimmen;
wobei die Prozessoren jedes ANCHOR-Objektes (2 - 5) die Entfernung zwischen sich selbst und dem TAG-Objekt (1) bestimmen, indem sie die Entfernung zwischen ihnen messen, und
sobald die Entfernung zwischen den ANCHOR-Objekten (2 - 5), die als ANCHOR (9) fungieren, und dem TAG-Objekt (1), das als TAG (8) fungiert, bestimmt wurde, die Steuereinheit (6) eines der ANCHOR-Objekte (2 - 5) als neuen TAG (8) zuordnet und das TAG-Objekt (1), das zuvor der TAG (8) war, nun als ein anderer ANCHOR (9) fungiert und dies wird wiederholt, bis alle Objekte (1 - 5) als TAG (8) fungiert haben und die Entfernung zwischen ihnen bestimmt wurde; und wobei die von der Steuereinheit (6) ausgeführte Konfiguration das Einrichten eines synchronisierten Zeitzyklusprotokolls für die Vielzahl von Objekten (1, 2, 3, 4, 5) und das Festlegen eines zugewiesenen Zeitschlitzes für jedes Objekt (1, 2, 3, 4 und 5) umfasst, um entweder als TAG (8) oder als ANCHOR (9) zu fungieren.

2. Kollisionsschutzsystem gemäß Anspruch 1, wobei der maximale Abstandsradius der Sende-Empfangseinheit (7) in jedem Objekt (1, 2, 3, 4 und 5) auf eine Entfernung zwischen 30 und 40 Metern eingestellt ist.

3. Kollisionsschutzsystem gemäß Anspruch 1, wobei das Kommunikationsnetzwerk, das die bidirektionale Kommunikation ermöglicht, ein drahtloses Kommunikationsnetzwerk ist.

4. Kollisionsschutzsystem gemäß Anspruch 3, wobei das drahtlose Kommunikationsnetzwerk Ultrabreitband-Hochfrequenzsignale verwendet.

5. Kollisionsschutzsystem gemäß Anspruch 1, wobei jedes Objekt (1, 2, 3, 4, 5) entweder statisch oder mobil ist.

6. Kollisionsschutzsystem gemäß Anspruch 1 oder 5, wobei die Vielzahl von Objekten (1, 2, 3, 4 und 5) Fahrzeuge umfasst, einschließlich: Gabelstapler, autonome und/oder programmierbare Maschinen, fahrerlose Transportfahrzeuge und/oder Arbeitsgeräte.

7. Kollisionsschutzsystem gemäß Anspruch 6, wobei die Vielzahl der Objekte (1, 2, 3, 4 und 5) ferner Personen umfasst.

8. Kollisionsschutzsystem gemäß Anspruch 1 oder 2, wobei die Entfernung zwischen den Objekten (1, 2, 3, 4, 5) unter Verwendung der Laufzeit bestimmt wird.

9. Kollisionsschutzverfahren für Bereiche mit Verkehr, wobei der Bereich eine Vielzahl von Objekten (1, 2, 3, 4, 5) einschließt, wobei jedes Objekt (1, 2, 3, 4, 5) mindestens eine Sende-Empfangseinheit (7) und einen Prozessor umfasst, wobei das Verfahren das Bestimmen einer Entfernung zwischen der Vielzahl von Objekten (1, 2, 3, 4, 5) unter Verwendung von Abstandssignalen (10), die von den Sende-Empfangseinheiten (7) unter der Ansteuerung einer Steuereinheit (6) ausgesendet und empfangen werden, über ein Kommunikationsnetzwerk, das eine bidirektionale Kommunikation zwischen der Vielzahl von Objekten (1, 2, 3, 4, 5) ermöglicht,
wobei:
- die Vielzahl der Objekte (1, 2, 3, 4, 5) mindestens fünf Objekte umfasst;
- die Steuereinheit (6) entweder in jedes Objekt (1, 2, 3, 4, 5) integriert ist und/oder sich in einer abgelegenen Position des Systems in Bezug auf alle Objekte (1, 2, 3, 4, 5) befindet; und wobei das Verfahren Folgendes umfasst:
- Festlegen, durch die Steuereinheit (6), zu jedem Zeitpunkt, dass ein erstes Objekt in einem ersten Betriebsmodus als eine Sende-Empfangseinheit zu fungieren hat, die einem Objekt zugeordnet ist, das ein Signal aussendet, oder TAG, (8) innerhalb eines zugewiesenen Zeitschlitzes, der durch einen synchronisierten Zeitzyklus definiert ist, und die anderen Objekte in einem zweiten Betriebsmodus als eine Sende-Empfangseinheit zu fungieren haben, die einem Objekt zugeordnet ist, das ein Signal empfängt, oder ANCHOR, (9), wobei nur ein Objekt der Vielzahl von Objekten (1, 2, 3, 4, 5) zu einem gegebenen Moment gemäß einer von der Steuereinheit (6) ausgeführten Konfiguration als TAG (8) fungiert, ohne Überlappung;
- Aussenden, durch die Sende-Empfangseinheit (7) des als TAG (8) fungierenden Objektes (1), von Abstandssignalen (10) in Richtung der als ANCHOR (9) fungierenden Objekte (2 - 5), wobei die in den ANCHOR-Objekten (2 - 5) integrierten Prozessoren, sobald die Sende-Empfangseinheiten (7) der ANCHOR-Objekte (2 - 5) das Abstandssignal (10) empfangen haben, dann die Entfernung zwischen sich selbst (2 - 5) und dem TAG (8), der gerade Objekt (1) ist, bestimmen;
- Bestimmen, durch die Prozessoren jedes ANCHOR-Objektes (2 - 5), der Entfernung zwischen sich selbst und dem TAG-Objekt (1), indem sie die Entfernung zwischen ihnen messen; und
- sobald die Entfernung zwischen den ANCHOR-Objekten (2 - 5), die als ANCHOR (9) fungieren, und dem TAG-Objekt (1), das als TAG (8) fungiert, bestimmt wurde, die Steuereinheit (6) eines der ANCHOR-Objekte (2 - 5) als neuen TAG (8) zuordnet und das TAG-Objekt (1), das zuvor der TAG (8) war, nun als ein anderer ANCHOR (9) fungiert und dies wird wiederholt, bis alle Objekte (1 - 5) als TAG (8) fungiert haben und die Entfernung zwischen ihnen bestimmt wurde.

10. Kollisionsschutzverfahren gemäß Anspruch 9, wobei der maximale Abstandsradius der Sende-Empfangseinheit (7) in jedem Objekt (1, 2, 3, 4 und 5) auf eine Entfernung zwischen 30 und 40 Metern eingestellt ist.

11. Kollisionsschutzverfahren gemäß Anspruch 9, wobei das Kommunikationsnetzwerk, das die bidirektionale Kommunikation ermöglicht, ein drahtloses Kommunikationsnetzwerk ist, das Ultrabreitband-Hochfrequenzsignale verwendet.

12. Kollisionsschutzverfahren gemäß Anspruch 9, wobei jedes Objekt (1, 2, 3, 4 und 5) entweder statisch oder mobil ist.

13. Kollisionsschutzverfahren gemäß Anspruch 9 oder 12, wobei die Vielzahl von Objekten (1, 2, 3, 4, 5) mindestens Fahrzeuge umfasst, einschließlich: Gabelstapler, autonome und/oder programmierbare Maschinen, fahrerlose Transportfahrzeuge und/oder Arbeitsgeräte.

14. Kollisionsschutzverfahren gemäß Anspruch 9, wobei die Entfernung zwischen den Objekten (1, 2, 3, 4, 5) unter Verwendung der Laufzeit bestimmt wird.

## Revendications

1. Un système anticollision pour des zones de trafic, où le système comporte :
- une pluralité d'objets (1, 2, 3, 4, 5) où chaque objet (1, 2, 3, 4, 5) comporte au moins une unité d'émission-réception (7) et un processeur configuré pour calculer une distance entre les objets (1, 2, 3, 4, 5) dérivée des signaux de télémétrie (10) émis et reçus par cette unité d'émission-réception (7) ;
- un réseau de communication qui permette la communication bidirectionnelle entre la pluralité d'objets (1, 2, 3, 4, 5), en utilisant l'unité d'émission-réception (7) associée à chaque objet (1, 2, 3, 4, 5) ; et
- une unité de contrôle (6) ;
où :
- la pluralité d'objets (1, 2, 3, 4, 5) comporte au moins cinq objets ;
- l'unité de contrôle (6) est soit intégrée dans chaque objet (1, 2, 3, 4, 5) et/ou située dans une position éloignée du système par rapport à tous les objets (1, 2, 3, 4, 5) ;
- l'unité d'émission-réception (7) de chaque objet (1, 2, 3, 4, 5) est configurée par cette unité de contrôle (6) pour alterner entre un premier mode opérationnel comme une unité d'émission-réception associée à un objet émettant un signal, ou TAG (8) et un deuxième mode opérationnel comme une unité d'émission-réception associée à un objet recevant un signal, ou ANCHOR (9) ;
où à tout moment un seul objet est dans le premier mode opérationnel comme le TAG (8) et tous les objets restants sont dans le deuxième mode opérationnel comme ANCHORS (9), sans chevauchement avec les autres objets ;
où l'unité d'émission-réception (7) de l'objet (1), fonctionnant comme le TAG (8) émet des signaux de télémétrie (10) vers les objets (2-5), fonctionnant comme ANCHORS (9), où dès que les unités d'émission-réception (7) des objets ANCHOR (2-5), ont reçu le signal de télémétrie (10) les processeurs intégrés dans les objets ANCHOR (2-5), déterminent alors la distance entre eux (2-5) et le TAG (8), qui est actuellement l'objet (1) ;
où les processeurs de chaque objet ANCHOR (2-5) déterminent la distance entre eux et l'objet TAG (1) en mesurant la distance entre eux et
dès que la distance entre les objets ANCHOR (2-5) fonctionnant comme ANCHORS (9) et l'objet TAG (1) fonctionnant comme le TAG (8) a été déterminée, l'unité de contrôle (6) attribue un des objets ANCHOR (2-5) comme le nouveau TAG (8) et l"objet TAG (1) auparavant le TAG (8), fonctionne maintenant comme un autre ANCHOR (9) et cela est répété jusqu'à ce que tous les objets (1-5) aient fonctionné comme le TAG (8) et ont déterminé la distance entre eux ; et
où cette configuration exécutée par l'unité de contrôle (6) qui comprend établir un protocole de temps-cycle synchronisé pour la pluralité d'objets (1,2,3,4,5) et désignant un créneau horaire attribué à chaque objet (1,2,3,4 et 5) soit pour fonctionner comme un TAG (8) soit comme un ANCHOR (9).

2. Le système anticollision conformément à la revendication 1, où le rayon de distance maximum de l'unité d'émission-réception (7) dans chaque objet (1,2,3,4 et 5) est établi à une distance entre 30 et 40 mètres.

3. Le système anticollision conformément à la revendication 1, où le réseau de communication permettant la communication bidirectionnelle est un réseau de communication sans fils.

4. Le système anticollision conformément à la revendication 3, où le réseau de communication sans fils utilise des signaux de radiofréquence à ultra large bande.

5. Le système anticollision conformément à la revendication 1, où chaque objet (1,2,3,4,5) est soit statique soit mobile.

6. Le système anticollision conformément à la revendication 1 ou 5, où la pluralité d'objets (1,2,3,4 et 5) comporte des véhicules comprenant : des machines FLTs, autonomes et/ou programmables, des véhicules à guidage automatisé et/ou des équipements de travail.

7. Le système anticollision conformément à la revendication 6, où la pluralité d'objets (1,2,3,4 et 5), comportent en outre des personnes.

8. Le système anticollision conformément à la revendication 1 ou 2, où la distance entre les objets (1,2,3,4,5) est déterminée en utilisant le Temps de Vol.

9. Une méthode anticollision pour des zones ayant du trafic, la zone comprenant une pluralité d'objets (1,2,3,4,5) où chaque objet (1,2,3,4,5) comporte au moins une unité d'émission-réception (7) et un processeur, la méthode comportant déterminer une distance entre cette pluralité d'objets (1,2,3,4,5) en utilisant des signaux de télémétrie (10) émis et reçus par ces unités d'émission-réception (7) sous le guide d'une unité de contrôle (6), à travers un réseau de communication qui permet la communication bidirectionnelle entre la pluralité des objets (1,2,3,4,5),
où :
- la pluralité d'objets (1,2,3,4,5) comporte au moins deux objets :
- l'unité de contrôle (6) est soit intégrée dans chaque objet (1,2,3,4,5) et/ou située dans une position éloignée du système par rapport à tous les objets (1,2,3,4,5) ; et en ce que la méthode comporte :
- désigner, par cette unité de contrôle (6), à tout moment, un premier objet pour fonctionner dans un premier mode de fonctionnement comme unité d'émission-réception associée à un objet émettant un signal, ou TAG (8) à l'intérieur d'un créneau horaire attribué défini par un cycle de temps synchronisé et les objets restants dans un deuxième mode opérationnel comme une unité d'émission-réception associée à un objet recevant un signal ou ANCHOR (9) où un seul objet de cette pluralité d'objets (1,2,3,4,5) fonctionne comme le TAG (8) à un moment donné conformément à une configuration exécutée par l'unité de contrôle (6), sans chevauchement ;
- émettre, par l'unité d'émission-réception (7) de l'objet (1) fonctionnant comme le TAG (8), des signaux de télémétrie (10) vers des objets (2-5) fonctionnant comme ANCHORS (9), où dès que les unités d'émission-réception (7) des objets ANCHOR (2-5) ont reçu le signal de télémétrie (10), les processeurs intégrés dans les objets ANCHOR (2-5), déterminent alors la distance entre eux (2-5) et le TAG (8), qui est actuellement l'objet (1) ;
- déterminer, par les processeurs de chaque objet ANCHOR (2-5), la distance entre eux et l'objet TAG (1) en mesurant la distance entre eux ; et
- dès que la distance entre les objets ANCHOR (2-5) fonctionnant comme ANCHORS (9), et l'objet TAG (1), fonctionnant comme le TAG (8) a été déterminée, l'unité de contrôle (6) attribue un des objets ANCHOR (2-5) comme le nouveau TAG (8) et l'objet TAG (1), auparavant le TAG (8), fonctionne maintenant comme un autre ANCHOR (9) et cela est répété jusqu'à ce que tous les objets (1-5) aient fonctionnés comme le TAG (8) et ont déterminé la distance entre eux.

10. La méthode anticollision conformément à la revendication 9, où le rayon de télémétrie maximum de l'unité d'émission-réception (7) dans chaque objet (1,2,3,4, et 5) est établi à une distance entre 30 et 40 mètres.

11. La méthode anticollision conformément à la revendication 9, où le réseau de communication permettant la communication bidirectionnelle est un réseau de communication sans fils utilisant des signaux de radiofréquence à ultra large bande.

12. La méthode anticollision conformément à la revendication 9, où chaque objet (1,2,3,4 et 5), est soit statique soit mobile.

13. La méthode anticollision conformément à la revendication 9 ou 12, où la pluralité d'objets (1,2,3,4,5) comporte au moins des véhicules comprenant : des machines FLTs, autonomes et/ou programmables, des véhicules à guidage automatisé et/ou des équipements de travail.

14. La méthode anticollision conformément à la revendication 9, où la distance entre les objets (1,2,3,4,5) est déterminée en utilisant le Temps de Vol.
